# EUROPEAN PATENT APPLICATION

(11) **EP 4 826 005 A1**
(43) Date of publication of application: **21.10.2026**
(21) Application number: 24903780.5
(22) Date of filing: 13.12.2024
(51) Int. Cl.: C22C 38/00, C21D 8/12, C22C 38/60, H01F 1/147

(54) **NON-ORIENTED ELECTRICAL STEEL SHEET AND METHOD FOR PRODUCING SAME**

(30) Priority: 15.12.2023 JP 2023212463
(71) Applicant: Nippon Steel Corporation, Tokyo 100-8071 (JP)
(72) Inventor: YASHIKI, Hiroyoshi, Tokyo 100-8071 (JP); NATORI, Yoshiaki, Tokyo 100-8071 (JP); KATAOKA, Takashi, Tokyo 100-8071 (JP); GOHMOTO, Yuuya, Tokyo 100-8071 (JP); TOMITA, Miho, Tokyo 100-8071 (JP)
(74) Representative: Vossius & Partner Patentanwälte Rechtsanwälte mbB
(86) International application number: PCT/JP2024/044148
(87) International publication number: WO 2025/127127

(57) **Abstract**

Provided is a non-oriented electrical steel sheet including a base metal having a chemical composition containing, by mass%, C: 0.0050% or less, Si: more than 3.50% and 4.50% or less, Mn: less than 0.60%, Al: 0.25 to 0.65%, P: 0.030% or less, S: 0.0020% or less, N: 0.0040% or less, Ti: less than 0.0040%, Nb: less than 0.0040%, Zr: less than 0.0040%, V: less than 0.0040%, Cu: less than 0.200%, Ni: less than 0.500%, and Sn and/or Sb: in a total amount of 0.030% or less, with the balance being Fe and impurities; and satisfying [4.3≤Si+Al+0.5xMn≤5.0], wherein an average crystal grain size of the base metal is more than 40 µm and 140 µm or less, an integration degree of the {111} orientation is 3.0 or more, an integration degree of the {110} orientation is 0.15 or less; and a sheet thickness is 0.10 to 0.30 mm.

## Description

### TECHNICAL FIELD

The present invention relates to a non-oriented electrical steel sheet and a method for manufacturing the same.

In recent years, global environmental issues have been attracting attention, and the demand for energy conservation efforts has been increasing. In particular, there is a strong demand for higher efficiency in electrical equipment. Therefore, there is an increasing demand for improved magnetic properties in non-oriented electrical steel sheets, which are widely used as iron core materials for motors, generators, and the like. This trend is particularly evident in drive motors for electric and hybrid vehicles and air conditioner compressor motors. In addition, there is a growing demand for higher output power in drive motors and compressor motors, which is effective in downsizing equipment.

To achieve high efficiency in motors, it is important to reduce iron loss and copper loss, which are the main sources of losses. To reduce the iron loss, it is effective to reduce the iron loss of the electrical steel sheets used as the iron core of the motor, and to reduce the copper loss, it is effective to increase the magnetic flux density of the electrical steel sheets. On the other hand, to achieve higher output power, it is important to achieve higher torque and higher rotation speed. Increasing torque is effectively achieved by increasing the magnetic flux density of the electrical steel sheets, and increasing rotational speed is effectively achieved by increasing the strength of the electrical steel sheets. Furthermore, increasing rotational speed requires increasing frequency, which in turn increases iron loss, thus requiring electrical steel sheets with low iron loss. Therefore, to advance both higher efficiency and higher output in motors, electrical steel sheets with low iron loss, high magnetic flux density, and high strength are required. Among these three characteristics, reducing iron loss, which contributes significantly to both higher efficiency and higher output, is the most effective means, and considering the recent progress in increasing rotational speed, increasing strength is the next most important factor.

The motor cores of the various motors described above are composed of a stator, which is a stationary element, and a rotor, which is a rotating element. The characteristics required for the stator and rotor that make up the motor core are not the same. The stator is required to have excellent magnetic properties (especially low iron loss), while the rotor is required to have low iron loss and excellent mechanical properties (high strength).

Since the required characteristics for the stator and the rotor are different, the desired characteristics can be achieved by producing different non-oriented electrical steel sheets for the stator and the rotor. However, preparing two types of non-oriented electrical steel sheets complicates the manufacturing process of the iron core and leads to a decrease in yield. Therefore, in order to achieve the low iron loss and high strength required for the rotor while also achieving the low iron loss required for the stator, non-oriented electrical steel sheets with low iron loss and high strength have been studied.

On the other hand, the dimensional accuracy of the iron core manufactured by punching is also important for improving the practical performance of motors. It is known that the anisotropy of the mechanical properties of the electrical steel sheet affects the dimensional accuracy of the iron core; therefore, methods for improving dimensional accuracy have been investigated.

For example, Patent Documents 1 to 4 attempt to achieve excellent magnetic properties and high strength. Patent Document 5 proposes adjusting the dimensions of the die to match the anisotropy of the mechanical properties of the electrical steel sheet.

### LIST OF PRIOR ART DOCUMENTS

### PATENT DOCUMENT

Patent Document 1: WO 2019/017426 A1
Patent Document 2: WO 2020/091039 A1
Patent Document 3: WO 2020/091043 A1
Patent Document 4: JP2010-90474 A
Patent Document 5: WO 2022/210867 A1

### SUMMARY OF INVENTION

### TECHNICAL PROBLEM

However, as disclosed in Patent Documents 1 to 4, achieving a non-oriented electrical steel sheet that combines low iron loss and high strength requires the inclusion of large amounts of alloying elements, which poses the problem of reduced toughness and increased susceptibility to fracture during cold rolling. Furthermore, improving the dimensional accuracy of the iron core during punching requires the extremely complicated procedure of adjusting the dimensions of the die each time to match the anisotropy of the mechanical properties of the electrical steel sheet, as disclosed in Patent Document 5.

The present invention has been made to solve these problems, and aims to stably provide a non-oriented electrical steel sheet that has low iron loss, high strength, and excellent dimensional accuracy during punching.

### SOLUTION TO PROBLEM

The gist of the present invention is a non-oriented electrical steel sheet and a method for manufacturing the same, which are described below.

(1) A non-oriented electrical steel sheet comprising a base metal having a chemical composition containing, by mass%,
   C: 0.0050% or less,
   Si: more than 3.50% and 4.50% or less,
   Mn: less than 0.60%,
   Al: 0.25 to 0.65%,
   P: 0.030% or less,
   S: 0.0020% or less,
   N: 0.0040% or less,
   Ti: less than 0.0040%,
   Nb: less than 0.0040%,
   Zr: less than 0.0040%,
   V: less than 0.0040%,
   Cu: less than 0.200%,
   Ni: less than 0.500%, and
   a total of one or two elements of Sn and Sb: 0.030% or less,
   with a balance being Fe and impurities; and
   satisfying the formula (i) below, wherein:
      an average crystal grain size of the base metal is more than 40 µm and 140 µm or less,
      an integration degree of the {111} orientation is 3.0 or more and an integration degree of the {110} orientation is 0.15 or less, at a 1/4 sheet thickness position from a surface of the base metal; and
      a sheet thickness of the base metal is 0.10 to 0.30 mm: $4.3 \leq Si + Al + 0.5 \times Mn \leq 5.0$ (i)
      where, the element symbols in the above formula represent the content (mass%) of each element.
(2) The non-oriented electrical steel sheet according to (1) above, wherein the steel sheet has a 0.2% proof strength of 450 MPa or more.
(3) The non-oriented electrical steel sheet according to (1) or (2) above, wherein the steel sheet has an insulation coating on a surface of the base metal.
(4) A method for manufacturing a non-oriented electrical steel sheet according to any one of (1) to (3) above,
   the method including:
   a hot rolling process;
   a hot-band annealing process in which a soaking temperature is 760 to 880°C and a soaking time is 5 to 100 seconds;
   a descaling process using pickling;
   a cold rolling process in which the sheet is reduced to a thickness of 0.10 to 0.30 mm; and
   a final annealing process, in which the sheet is heated to a temperature of 850°C or higher so that a heating rate in a temperature range of 500 to 850°C is 100°C/s or lower, and then soaked at a temperature ranging from 850 to 1050°C for 1 to 300 seconds,
   wherein the hot rolling process, the hot-band annealing process, the descaling process, the cold rolling process, and the final annealing process are sequentially performed on a steel slab having a chemical composition containing, in mass%,
   C: 0.0050% or less,
   Si: more than 3.50% and 4.50% or less,
   Mn: less than 0.60%,
   Al: 0.25 to 0.65%,
   P: 0.030% or less,
   S: 0.0020% or less,
   N: 0.0040% or less,
   Ti: less than 0.0040%,
   Nb: less than 0.0040%,
   Zr: less than 0.0040%,
   V: less than 0.0040%,
   Cu: less than 0.200%,
   Ni: less than 0.500%, and
   a total of one or two elements of Sn and Sb: 0.030% or less,
   with a balance being Fe and impurities; and
   satisfying the formula (i) below: $4.3 \leq Si + Al + 0.5 \times Mn \leq 5.0$ (i)
   where, the element symbols in the above formula represent the content (mass%) of each element.

### ADVANTAGEOUS EFFECTS OF INVENTION

According to the present invention, it is possible to obtain a non-oriented electrical steel sheet having excellent magnetic properties and high strength, while also exhibiting superior dimensional accuracy during punching processes.

### DESCRIPTION OF EMBODIMENTS

The present inventors conducted extensive research to solve the above-described problems, and have arrived at the following findings.

In order to obtain non-oriented electrical steel sheets with low iron loss and high strength while maintaining toughness during cold rolling, it is necessary to optimize the contents of the major alloying elements: Si, Mn, and Al.

Specifically, Si, which has the highest solid solution strengthening ability and contributes most to increasing electrical resistance, is included in an amount of more than 3.50% but 4.50% or less. In addition, to obtain good grain growthability, Al is included in an amount of 0.25% or more. On the other hand, to suppress deterioration of toughness and form textures that achieve good dimensional accuracy, the Al content is to be 0.65% or less.

Furthermore, Mn has the lowest solid solution strengthening ability among the three elements, but contributes to increasing electrical resistance with little deterioration in toughness. Furthermore, Mn fixes S as MnS, thereby mitigating the adverse effects of S on magnetic properties and surface texture. However, after extensive research, the inventors have found that excessive inclusion of Mn, which has a lower solid solution strengthening ability than Si and Al, results in an increase in alloy cost that outweighs the strength improvement benefits, and the effect of mitigating the adverse effects of S also saturates. Therefore, the Mn content is to be less than 0.60%.

As mentioned above, reducing the anisotropy of the mechanical properties of electrical steel sheet is effective in achieving excellent dimensional accuracy. The inventors further investigated methods for reducing the anisotropy of mechanical properties. As a result, they found that the anisotropy of mechanical properties can be reduced by controlling the texture.

In order to develop textures that are advantageous for dimensional accuracy, it is effective to reduce the Al, Sn, and Sb contents and to lower the soaking temperature during hot-band annealing.

However, textures that are advantageous for dimensional accuracy are also textures that are disadvantageous for magnetic properties. As a result, a certain degree of reduction in magnetic flux density is unavoidable. Nevertheless, after detailed investigation, the inventors have found that the effect on iron loss is negligible.

The present invention was made based on the above findings. Each requirement of the present invention will be described in detail below.

### 1. Overall Configuration

The non-oriented electrical steel sheet according to an embodiment of the present invention has low iron loss and high strength, and also exhibits excellent dimensional accuracy during punching processes, making it suitable for both stators and rotors. In addition, the non-oriented electrical steel sheet according to the present embodiment preferably has an insulation coating on a surface of the base metal that is described below.

### 2. Chemical Composition of the Base Metal

The reasons for limiting each element are as follows. Note that in the following description, "%" refers to "mass %."

### C: 0.0050% or less

C (carbon) is an element that causes iron loss degradation in non-oriented electrical steel sheets. If the C content exceeds 0.0050%, the iron loss of the non-oriented electrical steel sheet deteriorates, preventing it from achieving good magnetic properties. Therefore, the C content is to be 0.0050% or less. A C content of 0.0040% or less is preferred, and a C content of 0.0035% or less is more preferred. There is no need to set a lower limit for the C content; it can be 0%. However, since C contributes to increasing the strength of non-oriented electrical steel sheets, if this effect is desired, a C content exceeding 0% is preferred, a content of 0.0005% or more is more preferred, and a content of 0.0010% or more is even more preferred.

### Si: more than 3.50% and 4.50% or less

Si (silicon) is an element that increases the electrical resistance of steel, reducing eddy current loss and improving the iron loss of non-oriented electrical steel sheets. In addition, due to its high solid-solution strengthening ability, Si is also effective in increasing the strength of non-oriented electrical steel sheets. To achieve these effects, the Si content is to be more than 3.50%. The Si content is preferably 3.60% or more, more preferably 3.70% or more, and even more preferably 3.80% or more. On the other hand, excessive Si content significantly deteriorates workability and makes cold rolling difficult. Therefore, the Si content is to be 4.50% or less. The Si content is preferably 4.40% or less, and more preferably 4.30% or less.

### Mn: less than 0.60%

Mn (manganese) is an effective element for increasing the electrical resistance of the steel, reducing eddy current loss, and improving iron loss in non-oriented electrical steel sheets. It also fixes sulfur (S) as MnS, mitigating the negative effects of S on magnetic properties and surface texture. However, since Mn has a lower solid-solution strengthening ability than Si and Al, a large amount is required to achieve high strength, resulting in a significant decrease in magnetic flux density and increased alloying costs. Furthermore, excessive addition of Mn saturates its effect in mitigating the negative effects of S. Therefore, the Mn content is to be less than 0.60%. The manganese content is preferably 0.55% or less, and more preferably 0.50% or less. There is no need to set a lower limit for the manganese content; it can be 0%. However, to achieve the above effects, a Mn content exceeding 0% is preferred, a content of 0.10% or more is more preferred, and a content of 0.20% or more is even more preferred.

### Al: 0.25 to 0.65%

Al (aluminum) is an element that increases the electrical resistance of the steel, thereby reducing eddy current loss and improving iron loss in non-oriented electrical steel sheets. In addition, although not as effective as Si, Al contributes to the strength of non-oriented electrical steel sheets through solid-solution strengthening. Furthermore, adding an appropriate amount of Al suppresses the refinement of AlN formed by its combination with N in the steel, thereby improving grain growth during final annealing. To achieve these effects, the Al content is to be 0.25% or more. An Al content of 0.30% or more is preferred, and 0.35% or more is even more preferred. On the other hand, excessive Al content reduces the integration degree of the {111} orientation and increases the integration degree of the {110} orientation, adversely affecting the dimensional accuracy of the core during punching. Therefore, the Al content is to be 0.65% or less. An Al content of 0.60% or less is preferred, and 0.55% or less is even more preferred.

In the present embodiment, the electrical resistance of the steel is ensured by appropriately controlling the Si, Al, and Mn contents. In addition, also from the perspective of ensuring strength, it is necessary to appropriately control the Si, Al, and Mn contents. Meanwhile, an upper limit is necessary also to ensure toughness. Therefore, in addition to the Si, Al, and Mn contents being within the respective ranges, the following formula (i) must be satisfied. The value of the middle part of the formula (i) below is preferably 4.4 or more, more preferably 4.5 or more; it is also preferably 4.9 or less, and more preferably 4.8 or less.$4.3 \leq Si + Al + 0.5 \times Mn \leq 5.0$ (i)

Note that the element symbols in the above formula represent the content (by mass%) of each element.

### P: 0.030% or less

P (phosphorus) is present in steel as an impurity. Excessive P content significantly reduces the toughness of non-oriented electrical steel sheets. Therefore, the P content is to be 0.030% or less. The P content is preferably 0.025% or less, and more preferably 0.020% or less. There is no need to set a lower limit for the P content, and it can be 0%. However, since extreme reduction in the P content may increase production costs, the P content is preferably more than 0%, more preferably 0.001% or more, even more preferably 0.003% or more, and even more preferably 0.005% or more.

### S: 0.0020% or less

S (sulfur) is an element that increases iron loss by forming fine MnS precipitates, degrading the magnetic properties of non-oriented electrical steel sheets. Therefore, the S content is to be 0.0020% or less. The S content is preferably 0.0018% or less, and more preferably 0.0016% or less. There is no need to set a lower limit for the S content; it can be 0%. However, since extreme reduction in the S content may increase manufacturing costs, the S content is preferably more than 0%, more preferably 0.0001% or more, even more preferably 0.0003% or more, and even more preferably 0.0005% or more.

### N: 0.0040% or less

N (nitrogen) is an element that is inevitably mixed into steel. It forms nitrides, increasing iron loss and degrading the magnetic properties of non-oriented electrical steel sheets. Therefore, the N content is to be 0.0040% or less. The N content is preferably 0.0035% or less, and more preferably 0.0030% or less. There is no need to set a lower limit for the N content; it can be 0%. However, since extreme reduction in the N content may increase manufacturing costs, the N content is preferably more than 0%, more preferably 0.0001% or more, even more preferably 0.0003% or more, and even more preferably 0.0005% or more.

### Ti: less than 0.0040%

Ti (titanium) is an element that is inevitably mixed into steel and can combine with carbon or nitrogen to form precipitates (carbides and nitrides). When carbides or nitrides are formed, these precipitates themselves degrade the magnetic properties of non-oriented electrical steel sheets. Furthermore, they inhibit grain growth during final annealing, thereby degrading the magnetic properties of non-oriented electrical steel sheets. Therefore, the Ti content is to be less than 0.0040%. The Ti content is preferably 0.0030% or less, and more preferably 0.0025% or less. There is no need to set a lower limit for the Ti content; it can be 0%. However, since extreme reduction in the Ti content may increase manufacturing costs, the Ti content is preferably more than 0%, more preferably 0.0001% or more, even more preferably 0.0003% or more, and even more preferably 0.0005% or more.

### Nb: less than 0.0040%

Nb (niobium) is an element that contributes to high strength by combining with carbon or nitrogen to form precipitates (carbides and nitrides). However, these precipitates themselves degrade the magnetic properties of non-oriented electrical steel sheets. Therefore, the Nb content is to be less than 0.0040%. The Nb content is preferably 0.0030% or less, more preferably 0.0025% or less, and even more preferably 0.0020% or less. There is no need to set a lower limit for the Nb content; it can be 0%. However, since extreme reduction in the Nb content may increase manufacturing costs, the Nb content is preferably more than 0%, more preferably 0.0001% or more, even more preferably 0.0003% or more, and even more preferably 0.0005% or more.

### Zr: less than 0.0040%

Zirconium (Zr) is an element that contributes to high strength by combining with carbon or nitrogen to form precipitates (carbides and nitrides). However, these precipitates themselves degrade the magnetic properties of non-oriented electrical steel sheets. Therefore, the Zr content is to be less than 0.0040%. The Zr content is preferably 0.0030% or less, more preferably 0.0025% or less, and even more preferably 0.0020% or less. There is no need to set a lower limit for the Zr content; it can be 0%. However, since extreme reduction in the Zr content may increase manufacturing costs, the Zr content is preferably more than 0%, more preferably 0.0001% or more, even more preferably 0.0003% or more, and even more preferably 0.0005% or more.

### V: less than 0.0040%

V (vanadium) is an element that contributes to high strength by combining with carbon or nitrogen to form precipitates (carbides and nitrides). However, these precipitates themselves degrade the magnetic properties of non-oriented electrical steel sheets. Therefore, the V content is to be less than 0.0040%. The V content is preferably 0.0030% or less, more preferably 0.0025% or less, and even more preferably 0.0020% or less. There is no need to set a lower limit for the V content, and it can be 0%. However, since extreme reduction in the V content may cause an increase in manufacturing costs, the V content is preferably more than 0%, more preferably 0.0001% or more, even more preferably 0.0003% or more, and even more preferably 0.0005% or more.

### Cu: less than 0.200%

Cu (copper) is an element that is inevitably mixed into steel. Intentional inclusion of Cu increases the manufacturing costs of non-oriented electrical steel sheets. Therefore, Cu does not need to be positively included in the present embodiment; impurity levels are sufficient. The Cu content is to be less than 0.200%, which is the maximum value that can be unavoidably mixed into steel during the manufacturing process. The Cu content is preferably 0.150% or less, and more preferably 0.100% or less. The lower limit of the Cu content is not particularly limited and can be 0%. However, extreme reduction in the Cu content may increase manufacturing costs. Therefore, the Cu content is preferably more than 0%, more preferably 0.001% or more, even more preferably 0.003% or more, and even more preferably 0.005% or more.

### Ni: less than 0.500%

Ni (nickel) is an element that is unavoidably mixed into steel. However, since Ni is also an element that improves the strength of non-oriented electrical steel sheets, it may be intentionally included. However, because Ni is expensive, the Ni content is to be less than 0.500%. The Ni content is preferably 0.400% or less, and more preferably 0.300% or less. The lower limit of the Ni content is not particularly limited and can be 0%. However, extreme reduction in the Ni content may result in an increase in manufacturing costs. Therefore, the Ni content is preferably more than 0%, more preferably 0.001% or more, even more preferably 0.003% or more, and even more preferably 0.005% or more. Furthermore, when intentionally included, it is preferable for the Ni content to be 0.200% or more.

### Total of one or two elements of Sn and Sb: 0.030% or less

Sn (tin) and Sb (antimony) increase the magnetic flux density of non-oriented electrical steel sheets, but also hinder the development of textures that are favorable for dimensional accuracy. Additionally, excessive amounts of Sn and Sb reduce the toughness of steel, making cold rolling difficult. Therefore, the total content of one or two elements of Sn and Sb is to be 0.030% or less. The total content of Sn and Sb is preferably 0.025% or less, and more preferably 0.020% or less. Each of the Sn and Sb contents is preferably 0.025% or less, more preferably 0.020% or less, and even more preferably 0.015% or less.

Note that there is no need to set a lower limit for the Sn and Sb contents; both can be 0%. On the other hand, Sn and Sb are elements useful for ensuring low iron loss in non-oriented electrical steel sheets by segregating to the surface of the base metal and suppressing oxidation and nitriding during annealing. To obtain this effect, the total content of one or two elements of Sn and Sb is preferably more than 0%, more preferably 0.001% or more, even more preferably 0.005% or more, even more preferably 0.010% or more, and even more preferably 0.015% or more.

In the chemical composition of the base metal of the non-oriented electrical steel sheet of the present invention, the balance consists of Fe and impurities. Here, "impurities" refers to components that are mixed in during industrial steel production due to various factors, such as raw materials like ore and scrap, or during the manufacturing process, and are acceptable within a range that does not adversely affect the present invention.

Note that the contents of Cr and Mo as impurity elements are not particularly specified. In the non-oriented electrical steel sheet of the present embodiment, even if these elements are included in a range of 0.5% or less, the properties of the non-oriented electrical steel sheet of the present embodiment are not particularly affected. Furthermore, even if Ca or Mg is included in a range of 0.002% or less, respectively, the properties of the non-oriented electrical steel sheet of the present embodiment are not significantly affected. Even if rare earth elements (REM) are included in a range of 0.004% or less, the properties of the non-oriented electrical steel sheet of the present embodiment are not particularly affected. Note that, in the present embodiment, REM refers to a total of 17 elements consisting of Sc, Y, and lanthanides, and the REM content refers to the total content of these elements.

O is also an impurity element, but even if it is included in a range of 0.035% or less, it does not affect the properties of the non-oriented electrical steel sheet according to the present embodiment. Since O may be mixed into the steel during the annealing process, if the content at the slab stage (i.e., ladle value) is in a range of 0.010% or less, it does not significantly affect the properties of the non-oriented electrical steel sheet according to the present embodiment.

In addition to the elements listed above, impurity elements such as Zn, Pb, Bi, As, B, and Se may be included, but as long as the respective contents are in a range of 0.0050% or less, they do not impair the properties of the non-oriented electrical steel sheet according to the present embodiment.

The chemical composition of the base metal of the non-oriented electrical steel sheet according to the present embodiment can be measured using various known methods. In the present invention, inductively coupled plasma atomic emission spectroscopy (ICP-AES) and inductively coupled plasma mass spectrometry (ICP-MS) are used to measure the composition, depending on the element content. C and S are measured using infrared absorption method after combustion, N using inert gas fusion thermal conductivity method, and O using inert gas fusion non-dispersive infrared absorption method.

### 3. Crystal Grain Size

In the present embodiment, the average crystal grain size of the base metal is to be more than 40 µm and 140 µm or less. By setting the average crystal grain size of the base metal to more than 40 µm, it is possible to suppress deterioration of hysteresis loss and improve iron loss. On the other hand, setting the average crystal grain size to 140 µm or less improves the strength of the steel and suppresses iron loss deterioration due to increased eddy current loss. The average crystal grain size is preferably 50 µm or more, and more preferably 60 µm or more. In addition, the average crystal grain size is preferably 130 µm or less, and more preferably 120 µm or less.

In the present embodiment, the average crystal grain size of the base metal shall be determined in accordance with JIS G 0551:2013, "Steel - Microscopic Test Method for Grain Size."

### 4. Texture

In the present embodiment, to improve dimensional accuracy during punching, the {111} orientation is developed while the {110} orientation is suppressed. Specifically, the integration degree of the {111} orientation, which is advantageous for dimensional accuracy, is to be 3.0 or more, and the integration degree of the {110} orientation, which is disadvantageous for dimensional accuracy, is to be 0.15 or less. The integration degree of the {111} orientation is preferably 3.5 or more, and more preferably more than 4.0. In addition, the integration degree of the {110} orientation is preferably 0.12 or less, and more preferably 0.10 or less. There is no need to set an upper limit to the integration degree of the {111} orientation, but considering manufacturability, a practical upper limit is 7.0. There is also no need to set a lower limit to the integration degree of the {110} orientation; it can be 0. On the other hand, if iron loss W_{10/400} needs to be sufficiently reduced, the integration degree of the {110} orientation is preferably 0.01 or more, and more preferably 0.02 or more.

Note that the integration degrees of the {111} and {110} orientations are measured using an X-ray diffraction device. The integration degree is calculated by measuring the X-ray intensity of a standard sample that does not have accumulation in a specific orientation and the test material using X-ray diffraction under the same conditions, and then dividing the obtained X-ray intensity of the test material by the X-ray intensity of the standard sample. The specific measurement method is as follows: A test specimen with a diameter of 26 mm is punched out from the base metal of the test material, a non-oriented electrical steel sheet, and the test specimen is then chemically polished to remove a depth of 1/4 of the sheet thickness from one surface, and the polished surface is then measured. From the viewpoint of achieving both measurement accuracy and test efficiency, the number of test specimens used for measurement is to be 10. The integration degrees of the {111} and {110} orientations are defined as the value obtained by calculating the integrated intensity of diffraction of each crystal plane from the X-ray diffraction profile measured by X-ray diffractometer and dividing it by the integrated intensity of a standard sample.

### <Measurement Method>

A test specimen with a diameter of 26 mm is placed in the sample magazine. A standard sample, which is provided by the manufacturer and does not accumulate in any specific orientation, is also placed at the same time. The measurement conditions for inverse X-ray analysis are: a scan axis of 2θ/6, a measurement method of FT, and a counting unit of CPS. The step width is 0.010°, the counting time is 0.6 seconds, the voltage is 50 kV, the current is 200 mA, the divergence/scattering slit is 1°, the divergence vertical slit is 10 mm, and the receiving slit is 0.15 mm. The measurement ranges are: (110): 2θ = 18.000 to 21.500°, (200): 2θ = 27.750 to 29.500°, and (222): 2θ = 49.750 to 52.000°.

### <Analysis Method>

The analysis software "Invpole.cnd" is used for the analysis. Since it is necessary to select standard results for analysis, the software is set to reference the data of the standard sample measured together with the test specimen. Smoothing, peak correction, and background removal are not performed during the analysis. Select "integrated intensity" for the intensity calculation, and select cubic crystal (α-axis: 2.866 Å) as the crystal system.

### 5. Magnetic Properties

For the non-oriented electrical steel sheet according to the present embodiment, excellent magnetic properties refer to low iron loss W_{10/400}.

Here, iron loss W_{10/400} is measured in accordance with the Epstein test method specified in JIS C 2550-1:2011. Iron loss W_{10/400} refers to the iron loss that occurs under the conditions of a maximum magnetic flux density of 1.0 T and a frequency of 400 Hz.

The density of the steel sheet during measuring using the Epstein method is to be the value calculated as [7.865 - 0.065 × (Si + 1.7 × Al)]. In this formula, Si and Al represent the respective mass percentages of Si and Al in the steel sheet. Furthermore, when measuring magnetic property values in accordance with the Epstein test method, there are two excitation directions: the L direction and the C direction. Measurements are performed using half of the test specimens for excitation in the L direction and the other half for excitation in the C direction.

It is not possible to extract large test specimens like Epstein test specimens from a motor core. To evaluate the iron loss of a motor core, the laminated iron core is separated into steel sheets, and small test specimens for single sheet magnetic measurement are produced by electrical discharge machining, with dimensions that can be extracted to match the size of the separated steel sheets. The iron loss value is then measured using a small single-sheet tester that is compatible with these small test specimens. The measurement principle follows the single sheet magnetic property tester method (Single Sheet Tester: SST) specified in JIS C 2556:2015. When measuring iron loss using the single sheet magnetic property tester, the excitation direction is set to two directions: L and C, and the average of the values measured in each direction is calculated as the magnetic property value of the material.

In addition, the above-described Epstein test specimens and small test specimens are taken in advance from several types of non-oriented electrical steel sheet, and iron loss values are measured using the Epstein method and the single sheet magnetic property measurement method. A conversion formula is derived from the relationship between the two measurements. The iron loss value measured using the single sheet tester is then corrected using the above conversion formula so that it is equivalent to the iron loss value measured using the Epstein method.

For the non-oriented electrical steel sheet according to the present embodiment, a low iron loss W_{10/400} means 14.5 W/kg or less for sheet thicknesses of 0.26 mm or more, 12.5 W/kg or less for sheet thicknesses of 0.21 to 0.25 mm, and 11.2 W/kg or less for sheet thicknesses of 0.20 mm or less. The iron loss W_{10/400} is preferably 14.3 W/kg or less for sheet thicknesses of 0.26 mm or more, 12.3 W/kg or less for sheet thicknesses of 0.21 to 0.25 mm, and 11.0 W/kg or less for sheet thicknesses of 0.20 mm or less.

### 6. Mechanical Properties

The non-oriented electrical steel sheet according to the present embodiment has high strength. While the 0.2% proof strength need not be particularly limited, it is preferable that it be 450 MPa or more. The 0.2% proof strength is more preferably 470 MPa or more, and even more preferably 490 MPa or more. The 0.2% proof strength is to be measured using the offset method by conducting a tensile test in accordance with JIS Z 2241:2011.

Test specimens are taken with the rolling direction as the longitudinal axis, with the sheet thickness that remains the same as that of the original steel sheet, and then processed into JIS No. 5 test specimen shapes. However, if it is difficult to extract a JIS No. 5 test specimen due to steel sheet size constraints, tensile tests may be conducted using scaled-down specimens.

### 7. Sheet Thickness

In the non-oriented electrical steel sheet according to the present embodiment, the base metal thickness is to be 0.10 mm or more from the perspective of manufacturing costs for cold rolling and final annealing. On the other hand, from the perspective of reducing iron loss, the base metal thickness is to be 0.30 mm or less. Therefore, the base metal thickness of the non-oriented electrical steel sheet according to the present embodiment is 0.10 to 0.30 mm. The base metal thickness is preferably 0.15 to 0.27 mm.

### 8. Insulation Coating

In the non-oriented electrical steel sheet according to the present embodiment, it is preferable to have an insulation coating on the surface of the base metal. Since non-oriented electrical steel sheets are punched into core blanks and stacked prior to use, providing an insulation coating on the surface of the base metal reduces eddy currents between the sheets, thereby reducing eddy current loss in the core.

The type of insulation coating is not particularly limited; known insulation coatings used for insulating non-oriented electrical steel sheets can be used. Examples of such insulation coatings include composite insulation coatings primarily composed of inorganic components and additionally containing organic components. Here, a composite insulation coating is an insulation coating that is primarily composed of at least one inorganic component, such as a metal chromate, a metal phosphate, or colloidal silica, a Zr compound, or a Ti compound, with fine organic resin particles dispersed within it. In particular, from the perspective of reducing the environmental impact during manufacturing, which has become increasingly necessary in recent years, insulation coatings using metal phosphates, Zr or Ti coupling agents, or carbonates or ammonium salts of Zr or Ti as starting materials are preferably used.

There are no particular limitations on the amount of insulation coating applied, but it is preferable that the amount be approximately 200 to 3000 mg/m² per side, and more preferably 300 to 2500 mg/m² per side. By forming the insulation coating so that the amount of coating falls within the above range, it is possible to maintain excellent uniformity. When measuring the amount of insulation coating applied after the fact, various known measurement methods can be used, such as a method of measuring the difference in mass before and after immersion in a sodium hydroxide aqueous solution, or a fluorescent X-ray method using a calibration curve method, etc.

### 9. Manufacturing Method

The non-oriented electrical steel sheet according to the present embodiment is not particularly limited in its manufacturing method. However, it can be manufactured by sequentially performing a hot-rolling process, a hot-band annealing process, a descaling process, a cold rolling process, and a final annealing process on a steel slab having the abovementioned chemical composition under the conditions shown below, for example. In addition, if an insulation coating is formed on the base metal's surface, the insulation coating formation process is performed after the final annealing process. Each process is described in detail below.

### <Hot Rolling Process>

A steel piece (slab) having the above chemical composition is heated and hot-rolled to obtain a hot-rolled sheet. The heating temperature of the steel slab during hot rolling is not particularly specified, but it is preferable to be, for example, 1050 to 1250°C. The thickness of the hot-rolled sheet after hot rolling is also not particularly specified, but it is preferable to set it at, for example, approximately 1.5 to 3.0 mm, taking into account the final thickness of the base metal.

### <Hot-Band Annealing Process>

Hot-band annealing is performed to reduce the iron loss of the steel sheet. For hot-band annealing, it is preferable to use a continuous annealing furnace, which offers higher productivity and a more homogeneous metallurgical structure after annealing than batch annealing. Specifically, hot-band annealing is performed at a soaking temperature of 760 to 880°C for a soaking time of 5 to 100 seconds. As mentioned above, lowering the hot-band annealing temperature makes it possible to develop textures advantageous for dimensional accuracy. On the other hand, in order to ensure low iron loss W_{10/400,} the soaking temperature is to be 760°C or higher. The lower the Si content of the base metal, the higher the soaking temperature is desired. Specifically, when the Si content is 4.40% or less, the soaking temperature is preferably 770°C or higher, and when the Si content is 4.30% or less, the soaking temperature is preferably 780°C or higher.

### <Descaling Process>

After hot-band annealing, the steel sheet is pickled to remove the scale layer that has formed on the base metal. The pickling conditions, such as the acid concentration used in the pickling, the concentration of the pickling accelerator used, and the temperature of the pickling solution, are not particularly limited and may be any known pickling conditions. In order to improve descaling properties, it is preferable to add shot blasting after hot-band annealing and before pickling.

### <Cold Rolling Process>

After the above-described descaling process, the steel sheet is cold-rolled. The cold rolling is performed at a reduction ratio so that the final thickness of the base metal is 0.10 to 0.30 mm.

### <Final Annealing Process>

After the cold rolling, final annealing is performed. In the manufacturing method for non-oriented electrical steel sheets according to the present embodiment, it is preferable to use a continuous annealing furnace for the final annealing. The final annealing is performed by heating the sheet to a temperature of 850°C or higher so that the heating rate in the temperature range of 500 to 850°C is 100°C/s or less, followed by a soaking temperature of 850 to 1050°C and a soaking time of 1 to 300 seconds. The atmosphere is preferably a mixed atmosphere of H₂ and N₂, with an H₂ content of 1 to 100% by volume (i.e., H₂ + N₂ = 100% by volume), with a dew point of -50 to +10°C.

Setting the heating rate in the temperature range of 500 to 850°C to 100°C/s or less makes it possible to develop textures advantageous for dimensional accuracy. If the heating rate exceeds 100°C/s, the integration degree of the {111} orientation may be less than 3.0. Note that the average heating rate may range from 1 to 100°C/s for the entire heating step, including the temperature range below 500°C and up to the soaking temperature.

If the soaking temperature is less than 850°C, the grain size will be too fine, resulting in undesirable iron loss, and if the soaking temperature exceeds 1050°C, the strength will be insufficient, which is also undesirable. Additionally, if the soaking time is less than 1 second, the grains will not grow sufficiently. On the other hand, if the soaking time exceeds 300 seconds, manufacturing costs will increase.

### <Insulation Coating Formation Process>

After the above-described final annealing, an insulation coating formation process is performed as needed. The method for forming the insulation coating is not particularly limited. It suffices to use a known treatment solution for forming insulation coating, such as those described below, and apply and dry the treatment solution using a known method. Examples of known insulation coatings include composite insulation coatings primarily composed of inorganic components with additional organic components.

A composite insulation coating is an insulation coating that is primarily composed of at least one of inorganic components such as a metal chromate and a metal phosphate, colloidal silica, a Zr compound and a Ti compound, with fine organic resin particles dispersed within it. In particular, from the perspective of reducing the environmental impact during manufacturing, which has become increasingly necessary in recent years, insulation coatings that use metal phosphates, Zr or Ti coupling agents as starting materials or insulation coatings that use metal phosphates, or carbonates or ammonium salts of Zr or Ti as starting materials are preferably used.

Before applying the treatment solution, the surface of the base metal on which the insulation coating will be formed may be subjected to any pretreatment, such as degreasing with an alkali or pickling with hydrochloric acid, sulfuric acid, phosphoric acid, etc. Alternatively, the treatment solution may also be applied to the surface of the base metal directly after final annealing without undergoing these pretreatments.

The non-oriented electrical steel sheet of the present invention obtained as described above has excellent properties such as low iron loss, high strength, and excellent dimensional accuracy during punching, and is therefore suitable as a material for both rotors and stators.

The present invention will be described in more detail below using examples, but is not limited to these examples.

### EXAMPLE 1

Slabs having the chemical compositions shown in Table 1 were heated to 1150°C, hot-rolled to a finishing thickness of 2.0 mm at a finishing temperature of 850°C, and then coiled at 600°C to obtain hot-rolled steel sheets. The resulting hot-rolled steel sheets were subjected to hot-band annealing in a continuous annealing furnace under the conditions shown in Table 2. The resulting steel sheets were descaled by shot blasting and pickling, and then cold-rolled to a thickness of 0.25 mm.

Furthermore, final annealing was performed in a mixed atmosphere of 20% H₂, 80% N₂, with a dew point of -30°C under the conditions shown in Table 2. After final annealing, the steel sheets were coated with an insulation coating consisting of aluminum phosphate and an acrylic-styrene copolymer resin emulsion with a particle size of 0.2 µm, and baked in air at 350°C.

### [Table 1]

**Table 1**

| Steel | Chemical composition (mass%, balance: Fe and impurities) | | | | | | | | | | | | | | | Middle value of formula (i)^{†} |
|---|---|---|---|---|---|---|---|---|---|---|---|---|---|---|---|---|
| | C | Si | Mn | P | S | Al | N | Ti | Nb | Zr | V | Cu | Ni | Sn | Sb | |
| A | 0.0025 | 4.23 | 0.41 | 0.013 | 0.0010 | 0.41 | 0.0018 | 0.0015 | 0.0008 | 0.0007 | 0.0002 | 0.029 | 0.023 | 0.001 | 0.001 | 4.8 |
| B | 0.0020 | 3.75 | 0.40 | 0.012 | 0.0009 | 0.64 | 0.0017 | 0.0016 | 0.0010 | 0.0011 | 0.0005 | 0.021 | 0.024 | 0.062 | <0.001 | 4.6 |
| C | 0.0022 | 4.02 | 0.30 | 0.014 | 0.0007 | 0.50 | 0.0022 | 0.0012 | 0.0009 | 0.0010 | 0.0006 | 0.022 | 0.023 | 0.019 | <0.001 | 4.7 |

| | | | | | | | | | | | | | | | | |
|---|---|---|---|---|---|---|---|---|---|---|---|---|---|---|---|---|
| ^{†}$4.3 \leq Si + Al + 0.5 \times Mn \leq 5.0$ (i) Underline indicates that value is outside of range of the present invention. | | | | | | | | | | | | | | | | |

### [Table 2]

**Table 2**

| Test No. | Steel | Hot-Band Annealing | | Final annealing | | | Average crystal grain size (µm) | Integration degree of {111} orientation | Integration degree of {110} orientation | 0.2% proof strength (MPa) | W_{10/400} (W/kg) | Circularity (µm) | Remarks |
|---|---|---|---|---|---|---|---|---|---|---|---|---|---|
| | | Soaking temperature (°C) | Soaking time (s) | Heating rate^{#1} (°C/s) | Soaking temperature (°C) | Soaking time (s) | | | | | | | |
| 1 | A | 850 | 40 | 20 | 1000 | 15 | 85 | 4.8 | 0.02 | 520 | 11.4 | 14 | Inventive example |
| 2 | B | 850 | 40 | 90 | 1000 | 15 | 88 | 3.1 | 0.16 | 482 | 11.7 | 38 | Comparative example |
| 3 | B | 975 | 40 | 20 | 1000 | 15 | 88 | 2.7 | 0.22 | 480 | 11.6 | 45 | Comparative example |
| 4 | C | 800 | 40 | 90 | 1000 | 15 | 84 | 4.3 | 0.06 | 501 | 11.7 | 20 | Inventive example |
| 5 | C | 830 | 40 | 90 | 1000 | 15 | 85 | 3.5 | 0.12 | 503 | 11.5 | 25 | Inventive example |
| 6 | C | 850 | 40 | 1000 | 1000 | 15 | 84 | 2.9 | 0.15 | 500 | 11.6 | 40 | Comparative example |

| | | | | | | | | | | | | | |
|---|---|---|---|---|---|---|---|---|---|---|---|---|---|
| Underline indicates that value is outside of range of the present invention. #1 Heating rate indicates that heating rate in a temperature range of 500 to 850°C. | | | | | | | | | | | | | |

The average crystal grain size of the base metal was measured for each resulting test material in accordance with JIS G 0551:2013, "Steel - Microscopic Test Method for Grain Size." In addition, Epstein test specimens were taken from each test material in the rolling and width directions, and the iron loss W_{10/400} was evaluated using the Epstein test in accordance with JIS C 2550-1:2011.

The base metal of each test material was chemically polished to remove the material from one surface to a depth of 1/4 of the sheet thickness. The integration degrees of the {111} and {110} orientations on the polished surface were measured using an X-ray diffractometer (Rigaku Corporation: RINT-2500). Subsequently, JIS No. 5 tensile test specimens were taken from each test material so that the longitudinal direction coincided with the rolling direction of the steel sheet, in accordance with JIS Z 2241: 2011. Then, using these test specimens, tensile tests were carried out in accordance with JIS Z 2241: 2011 to measure the 0.2% proof strength.

Furthermore, in the present examples, to evaluate the dimensional accuracy during punching, a 50 mm diameter disk was punched and the circularity of the punched steel sheet was measured. The circularity measurement in the present invention conforms to the description in JIS B0621 (1984), which states, "Circularity shall be represented by the difference in the radii of the two circles in the case where the distance between the two concentric circles becomes minimum when the considered circular feature is held between two concentric geometrical circles, and be expressed as "circularity __mm" or "circularity __µm." In the present examples, a circularity of 30 µm or less was determined to indicate excellent dimensional accuracy during punching.

The above results are also shown in Table 2.

Test Nos. 1, 4, and 5, which satisfied the requirements of the present invention, had low iron loss W_{10/400}, a high 0.2% proof strength of 450 MPa or more, and were found to have good circularity. In contrast, in Test Nos. 2, 3, and 6, which were comparative examples, the iron loss W_{10/400} and the 0.2% proof strength were equivalent to those of the invention examples, but the circularity was inferior.

Specifically, in Test No. 2, the Sn content was more than the specified range. This caused the integration degree of the {110} orientation to exceed the specified range, resulting in poor circularity. In Test No. 3, the Sn content was more than the specified range and the soaking temperature for hot-band annealing exceeded the specified range. Consequently, the integration degree of the {111} orientation fell below the specified range and the integration degree of the {110} orientation exceeded the specified range, resulting in poor circularity.

In Test No. 6, the heating rate during final annealing was more than the specified range, resulting in a lower integration degree of the {111} orientation and poor circularity. As described above, it became clear that poor circularity occurs when the integration degree of the {111} orientation is less than the specified range, the integration degree of the {110} orientation is more than the specified range, or the integration degrees of both orientations simultaneously fall outside the specified range.

### EXAMPLE 2

Slabs with the chemical composition shown in Table 3 were heated to 1150°C, hot-rolled to a finishing thickness of 2.0 mm at a finishing temperature of 850°C, and coiled at 600°C to obtain hot-rolled steel sheets. The resulting hot-rolled steel sheets were then subjected to hot-band annealing in a continuous annealing furnace under the conditions shown in Table 4. The resulting steel sheets were descaled by shot blasting and pickling, and then cold-rolled to a thickness of 0.25 mm.

Furthermore, final annealing was performed in a mixed atmosphere of 20% H₂ and 80% N₂, with a dew point of -30°C under the conditions shown in Table 4. After final annealing, the steel sheets were coated with an insulation coating consisting of aluminum phosphate and an acrylic-styrene copolymer resin emulsion with a particle size of 0.2 µm, and baked in air at 350°C.

### [Table 3]

**Table 3**

| Steel | Chemical composition (mass%, balance: Fe and impurities) | | | | | | | | | | | | | | | Middle value of formula (i)^{†} |
|---|---|---|---|---|---|---|---|---|---|---|---|---|---|---|---|---|
| | C | Si | Mn | P | S | Al | N | Ti | Nb | Zr | v | Cu | Ni | Sn | Sb | |
| D | 0.0015 | 4.43 | 0.22 | 0.007 | 0.0004 | 0.32 | 0.0010 | 0.0018 | 0.0012 | 0.0005 | 0.0010 | 0.008 | 0.010 | <0.001 | 0.001 | 4.9 |
| E | 0.0022 | 4.70 | 0.15 | 0.019 | 0.0010 | 0.25 | 0.0012 | 0.0015 | 0.0005 | 0.0015 | 0.0010 | 0.005 | 0.014 | 0.020 | 0.008 | 5.0 |
| F | 0.0030 | 4.06 | 0.32 | 0.016 | 0.0010 | 0.54 | 0.0019 | 0.0013 | 0.0015 | 0.0008 | 0.0009 | 0.035 | 0.036 | 0.015 | <0.001 | 4.8 |
| G | 0.0027 | 3.48 | 0.58 | 0.020 | 0.0013 | 0.50 | 0.0020 | 0.0017 | 0.0007 | 0.0009 | 0.0011 | 0.009 | 0.025 | 0.018 | 0.001 | 4.3 |
| H | 0.0012 | 4.10 | 0.55 | 0.025 | 0.0018 | 0.65 | 0.0028 | 0.0025 | 0.0007 | 0.0008 | 0.0007 | 0.016 | 0.025 | <0.001 | <0.001 | 5.0 |
| I | 0.0032 | 3.65 | 0.32 | 0.018 | 0.0011 | 0.95 | 0.0023 | 0.0020 | 0.0010 | 0.0010 | 0.0008 | 0.015 | 0.023 | 0.022 | 0.001 | 4.8 |
| J | 0.0023 | 3.63 | 0.25 | 0.009 | 0.0008 | 0.60 | 0.0024 | 0.0011 | 0.0022 | 0.0025 | 0.0015 | 0.025 | 0.030 | 0.002 | 0.002 | 4.4 |
| K | 0.0029 | 3.82 | 0.19 | 0.015 | 0.0029 | 0.50 | 0.0028 | 0.0012 | 0.0025 | 0.0020 | 0.0012 | 0.014 | 0.018 | <0.001 | <0.001 | 4.4 |
| L | 0.0026 | 3.92 | 0.33 | 0.010 | 0.0009 | 0.44 | 0.0013 | 0.0016 | 0.0011 | 0.0008 | 0.0015 | 0.021 | 0.024 | 0.012 | 0.004 | 4.5 |
| M | 0.0025 | 3.95 | 0.32 | 0.012 | 0.0010 | 0.15 | 0.0028 | 0.0019 | 0.0012 | 0.0015 | 0.0010 | 0.013 | 0.015 | <0.001 | <0.001 | 4.3 |
| N | 0.0028 | 4.42 | 0.23 | 0.018 | 0.0008 | 0.64 | 0.0012 | 0.0012 | 0.0009 | 0.0008 | 0.0010 | 0.023 | 0.025 | 0.016 | 0.012 | 5.2 |

$4.3 \leq Si + Al + 0.5 \times Mn \leq 5.0$ (i)

Underline indicates that value is outside of range of the present invention.

### [Table 4]

**Table 4**

| Test No. | Steel | Hot-Band Annealing | | Final annealing | | | Average crystal grain size (µm) | Integration degree of {111} orientation | Integration degree of {110} orientation | 0.2% proof strength (MPa) | W_{10/400} (W/kg) | Remarks |
|---|---|---|---|---|---|---|---|---|---|---|---|---|
| | | Soaking temperature (°C) | Soaking time (s) | Heating rate^{#1} (°C/s) | Soaking temperature (°C) | Soaking time (s) | | | | | | |
| 7 | D | 760 | 50 | 20 | 980 | 20 | 90 | 5.5 | 0.01 | 538 | 11.2 | Inventive example |
| 8 | E | 840 | 50 | Fracture during cold rolling | | | | | | | | Comparative example |
| 9 | F | 825 | 50 | 50 | 960 | 20 | 65 | 5.0 | 0.03 | 544 | 11.9 | Inventive example |
| 10 | G | 825 | 50 | 50 | 980 | 20 | 80 | 4.0 | 0.05 | 448 | 12.0 | Comparative example |
| 11 | H | 825 | 40 | 50 | 1030 | 20 | 105 | 4.2 | 0.04 | 516 | 11.2 | Inventive example |
| 12 | I | 840 | 40 | 90 | 1000 | 20 | 85 | 2.8 | 0.17 | 512 | 11.5 | Comparative example |
| 13 | J | 840 | 50 | 20 | 960 | 20 | 68 | 5.1 | 0.02 | 475 | 12.3 | Inventive example |
| 14 | J | 760 | 50 | 20 | 960 | 20 | 60 | 5.5 | 0.01 | 480 | 12.5 | Inventive example |
| 15 | K | 840 | 30 | 20 | 960 | 20 | 39 | 4.3 | 0.03 | 528 | 13.2 | Comparative example |
| 16 | L | 840 | 30 | 20 | 950 | 20 | 50 | 4.1 | 0.08 | 520 | 12.3 | Inventive example |
| 17 | M | 840 | 30 | 20 | 950 | 20 | 38 | 5.0 | 0.02 | 528 | 12.8 | Comparative example |
| 18 | N | 840 | 30 | Fracture during cold rolling | | | | | | | | Comparative example |

| | | | | | | | | | | | | |
|---|---|---|---|---|---|---|---|---|---|---|---|---|
| Underline indicates that value is outside of range of the present invention. #1 Heating rate indicates that heating rate in a temperature range of 500 to 850°C. | | | | | | | | | | | | |

For each of the resulting test materials, the average crystal grain size of the base metal, the iron loss W_{10/400}, the integration degrees of the {111} and {110} orientations, and the 0.2% proof strength were measured using the same methods as in Example 1. The results are also shown in Table 4.

In Test Nos. 7, 9, 11, 13, 14, and 16, which satisfy the requirements of the present invention, it was found that the iron loss W_{10/400} was low and the 0.2% proof strength was high at 450 MPa or more. In contrast, in Test Nos. 8, 10, 12, 15, 17, and 18, which are comparative examples, the iron loss W_{10/400}, 0.2% proof strength, or texture was inferior; or they fractured during cold rolling to make it impossible to evaluate their properties.

Specifically, in Test No. 8, the Si content was more than the specified range, resulting in fracture during cold rolling. In Test No. 10, the Si content was less than the specified range, resulting in a poor 0.2% proof strength. In Test No. 12, the Al content was more than the specified range, resulting in a lower integration degree of the {111} orientation and a higher integration degree of the {110} orientation.

In Test No. 15, the S content was more than the specified range, resulting in a lower grain size and poor iron loss. In Test No. 17, the Al content was below the specified range, resulting in a lower grain size and poor iron loss. In Test No. 18, the [Si + Al + 0.5 × Mn] value exceeded the specified range, resulting in fracture during cold rolling and making it impossible to evaluate the properties.

### INDUSTRIAL APPLICABILITY

As described above, according to the present invention, it is possible to obtain a non-oriented electrical steel sheet that has excellent magnetic properties and high strength, as well as excellent dimensional accuracy during punching.

## Claims

1. A non-oriented electrical steel sheet comprising a base metal having a chemical composition containing, by mass%,
C: 0.0050% or less,
Si: more than 3.50% and 4.50% or less,
Mn: less than 0.60%,
Al: 0.25 to 0.65%,
P: 0.030% or less,
S: 0.0020% or less,
N: 0.0040% or less,
Ti: less than 0.0040%,
Nb: less than 0.0040%,
Zr: less than 0.0040%,
V: less than 0.0040%,
Cu: less than 0.200%,
Ni: less than 0.500%, and
a total of one or two elements of Sn and Sb: 0.030% or less,
with a balance being Fe and impurities; and
satisfying the formula (i) below, wherein:
an average crystal grain size of the base metal is more than 40 µm and 140 µm or less;
an integration degree of the {111} orientation is 3.0 or more and an integration degree of the {110} orientation is 0.15 or less at a 1/4 sheet thickness position from a surface of the base metal; and
a sheet thickness is 0.10 to 0.30 mm: $4.3 \leq Si + Al + 0.5 \times Mn \leq 5.0$ (i)
where, the element symbols in the above formula represent the content (mass%) of each element.

2. The non-oriented electrical steel sheet according to claim 1, wherein the steel sheet has a 0.2% proof strength of 450 MPa or more.

3. The non-oriented electrical steel sheet according to claim 1 or 2, wherein the steel sheet has an insulation coating on a surface of the base metal.

4. A method for manufacturing a non-oriented electrical steel sheet according to any one of claims 1 to 3,
the method including:
a hot rolling process;
a hot-band annealing process in which a soaking temperature is 760 to 880°C and a soaking time is 5 to 100 seconds;
a descaling process using pickling;
a cold rolling process in which the sheet is reduced to a thickness of 0.10 to 0.30 mm; and
a final annealing process, in which the sheet is heated to a temperature of 850°C or higher so that a heating rate in a temperature range of 500 to 850°C is 100°C/s or lower, and then soaked at a temperature ranging from 850 to 1050°C for 1 to 300 seconds,
wherein the hot rolling process, the hot-band annealing process, the descaling process, the cold rolling process, and the final annealing process are sequentially performed on a steel slab having a chemical composition comprising, in mass%,
C: 0.0050% or less,
Si: more than 3.50% and 4.50% or less,
Mn: less than 0.60%,
Al: 0.25 to 0.65%,
P: 0.030% or less,
S: 0.0020% or less,
N: 0.0040% or less,
Ti: less than 0.0040%,
Nb: less than 0.0040%,
Zr: less than 0.0040%,
V: less than 0.0040%,
Cu: less than 0.200%,
Ni: less than 0.500%, and
a total of one or two elements of Sn and Sb: 0.030% or less,
with a balance being Fe and impurities; and
satisfying the formula (i) below: $4.3 \leq Si + Al + 0.5 \times Mn \leq 5.0$ (i)
where, the element symbols in the above formula represent the content (mass%) of each element.
